(19)

Europäisches Patentamt
European Patent Office
Office européen des brevets

(11)  **EP 4 521 197 A2**

(12)  **EUROPEAN PATENT APPLICATION**

(43) Date of publication:
**12.03.2025  Bulletin 2025/11**

(21) Application number: **24199277.5**

(22) Date of filing: **09.09.2024**

(51) International Patent Classification (IPC):
*G06F 1/3203* (2019.01)     *G06F 1/3206* (2019.01)
*G06F 1/3209* (2019.01)     *G06F 1/3228* (2019.01)
*G06F 1/324* (2019.01)      *G06F 1/3234* (2019.01)
*G06F 1/3287* (2019.01)     *G06F 9/48* (2006.01)
*G06F 9/50* (2006.01)       *G06N 20/00* (2019.01)
*H04L 12/10* (2006.01)      *H04L 12/40* (2006.01)
*H04L 41/00* (2022.01)      *H04L 43/00* (2022.01)

(52) Cooperative Patent Classification (CPC):
G06F 1/3203; G06F 1/3206; G06F 1/3209;
G06F 1/3228; G06F 1/324; G06F 1/3243;
G06F 1/3287; G06F 9/4893; G06F 9/5083;
G06F 9/5094; G06N 20/00; H04L 12/00;
H04L 12/10; H04L 12/40039; H04L 12/40045;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **11.09.2023  IN 202341060929
28.06.2024  US 202418759468**

(71) Applicant: **Juniper Networks, Inc.
Sunnyvale, CA 94089 (US)**

(72) Inventors:
• **KOMMULA, Raja
Sunnyvale, 94089 (US)**
• **SUNKADA, Ganesh Byagoti Matad
Sunnyvale, 94089 (US)**
• **SRIDHAR, Thayumanavan
Sunnyvale, 94089 (US)**
• **YAVATKAR, Raj
Sunnyvale, 94089 (US)**

(74) Representative: **D Young & Co LLP
3 Noble Street
London EC2V 7BQ (GB)**

(54)  **CARBON-AWARE PREDICTIVE WORKLOAD SCHEDULING AND SCALING**

(57)  Example techniques and devices are described for scheduling workloads. An example computing device is configured to predict an occurrence of a scale event for a first service. The computing device is configured to determine, based on the predicted occurrence of the scale event for the first service, a predicted level of greenness for the first service, the predicted level of greenness being based on a current level of greenness for the first service and a predicted scale up factor. The computing device is configured to determine whether the predicted level of greenness for the first service satisfies a first threshold. The computing device is configured to perform, based on whether the predicted level of greenness for the first service satisfies the first threshold, a first action on a first workload of the first service.

FIG.5

(52) Cooperative Patent Classification (CPC): (Cont.)
    **H04W 52/00;** G06F 2209/5019

## Description

This application claims the benefit of US Patent Application No. 18/759,468, filed 28 June 2024, which claims the benefit of IN Provisional Patent Application No. 202341060929, filed 11 September 2023, the entire content of each application is incorporated herein by reference.

## TECHNICAL FIELD

This disclosure relates to computer networks and, more specifically, to computer networks having at least a portion of energy requirements met by renewable energy sources.

## BACKGROUND

In a typical cloud data center environment, there is a large collection of interconnected servers that provide computing and/or storage capacity to run various applications. For example, a data center may comprise a facility that hosts applications and services for subscribers, e.g., customers of the data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power a large number of homes (e.g., around 80,000). Data centers may also run application workloads that are compute and data intensive, such as crypto mining and machine learning applications, that consume a significant amount of energy. As energy use has risen, customers of data centers and data center providers themselves have become more concerned about meeting energy requirements through the use of renewable (e.g., green) energy sources, as opposed to non-renewable, carbon emitting, fossil fuel-based (e.g., non-green or black) energy sources. As such, some service level agreements (SLAs) associated with data center services include green energy goals or requirements.

## SUMMARY

In general, techniques are described for power management and workload scheduling and scaling to address concerns regarding the use of green and non-green energy sources (sometimes referred to as black energy sources). In micro service-based architectures, like Kubernetes, a service or workload scaling may be based on resources (e.g., CPU resources, memory resources, etc.) and/or custom metrics. As used herein workload scaling refers to horizontal scaling, such as the increase or decrease of replicas (e.g., workloads) of a particular service. Scheduling such scaling may be based on the availability of required compute resources and/or other constraints. Some scaling and scheduling techniques may be based on, or take into account, carbon emission factors.

Existing scheduling techniques may attempt to schedule scaled-up workloads on to a green node, if a green node is available during scaling. If a green node is not available, the existing techniques may starve the service associated with the workload (e.g., not replicate the workload) until a green node becomes available, or, alternatively, may schedule the replicated workload to a non-green node. This may cause an imbalanced utilization of green energy by services, which may cause one or more breaches of service level green energy SLAs. In some existing scaling and scheduling techniques, in order to try to improve compliance with service level green energy SLAs, the techniques may reschedule various workloads at run time when scale up occurs. Such rescheduling may cause many service preemptions and increased service disruptions due to the many reschedules which may negatively affect services meeting functional SLA requirements.

As such, it may be desirable to utilize a predictive technique when making scaling and scheduling decisions to better comply with service level green energy SLAs. For example, a computing device may determine an energy metric, such as a green quotient, associated with an application. This energy metric may be indicative of a percentage of the total energy consumption associated with the application that is due to green power sources. The computing device may, prior to a scale event, may reschedule "high green" workloads from green nodes to non-green nodes to free up resources on the green nodes for scale up of other workloads, which may be in greater need of utilizing green power sources to meet a carbon emission SLA requirement. A high green workload may be a workload whose energy metric (e.g., green quotient) is satisfies a threshold level above the carbon emission SLA requirement.

In one example, this disclosure describes a computing device including one or more memories and one or more processors communicatively coupled to the one or more memories, the one or more processors being configured to:

predict an occurrence of a scale event for a first service; determine, based on the predicted occurrence of the scale event for the first service, a predicted level of greenness for the first service, the predicted level of greenness being based on a current level of greenness for the first service and a predicted scale up factor; determine whether the predicted level of greenness for the first service satisfies a first threshold; and perform, based on whether the predicted level of greenness for the first service satisfies the first threshold, a first action on a first workload of the first service.

In another example, this disclosure describes a method including: predicting, by one or more processors, an occurrence of a scale event for a first service; determining, by the one or more processors and based on the predicted occurrence of the scale event for the first service, a predicted level of greenness for the first service, the predicted level of greenness being based on a current level of greenness for the first service and a predicted scale up factor; determining, by the one or more processors, whether the predicted level of greenness for the first service satisfies a first threshold; and performing, by the one or more processors and based on whether the predicted level of greenness for the first service satisfies the first threshold, a first action on a first workload of the first service.

In another example, this disclosure describes computer-readable media storing instructions which, when executed, cause one or more processors to: predict an occurrence of a scale event for a first service; determine, based on the predicted occurrence of the scale event for the first service, a predicted level of greenness for the first service, the predicted level of greenness being based on a current level of greenness for the first service and a predicted scale up factor; determine whether the predicted level of greenness for the first service satisfies a first threshold; and perform, based on whether the predicted level of greenness for the first service satisfies the first threshold, a first action on a first workload of the first service.

The details of one or more examples of this disclosure are set forth in the accompanying drawings and the description below. Other features, objects, and advantages will be apparent from the description and drawings, and from the claims.

**BRIEF DESCRIPTION OF DRAWINGS**

FIG. 1 is a block diagram illustrating an example network system having a data center in which examples of the techniques described herein may be implemented.

FIG. 2 is a block diagram illustrating an example computing device according to techniques described herein.

FIG. 3 is a conceptual diagram illustrating a system for carbon-aware predictive workload scheduling and scaling according to one or more aspects of this disclosure.

FIG. 4 is a flow diagram illustrating example techniques for carbon-aware workload scheduling and scaling according to one or more aspects of this disclosure.

FIG. 5 is a flow diagram illustrating further example techniques for carbon-aware workload scheduling and scaling according to one or more aspects of this disclosure.

Like reference characters denote like elements throughout the description and figures.

**DETAILED DESCRIPTION**

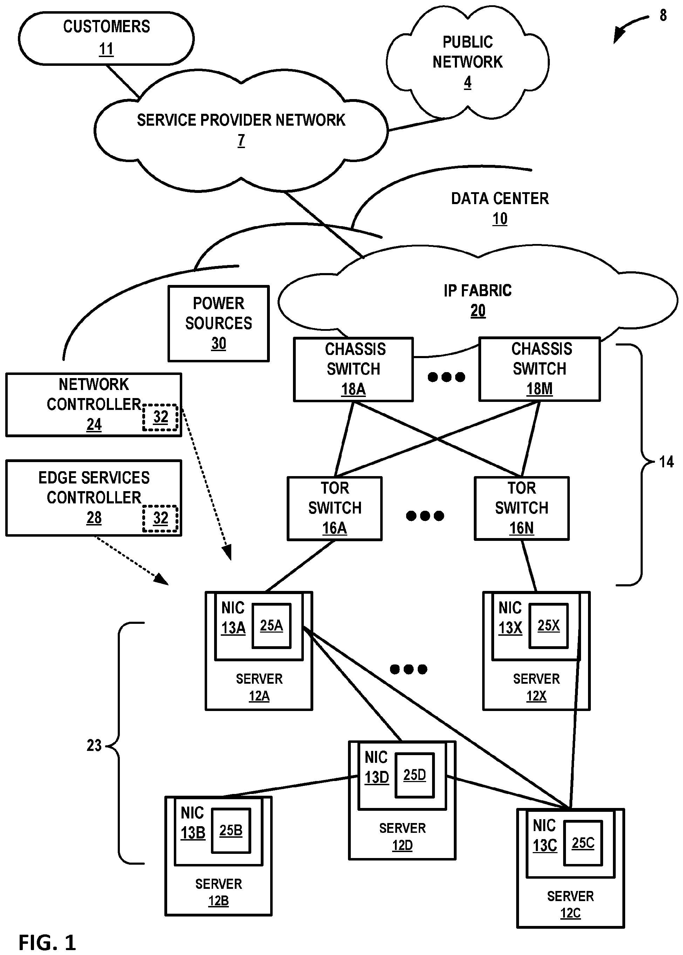

FIG. 1 is a block diagram illustrating an example system 8 having computing infrastructure in which examples of the carbon-aware workload scheduling and scaling techniques described herein may be implemented. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for a Network Function Virtualization (NFV) architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

In some examples, servers 12 each may include at least one network interface card (NIC) of NICs 13A-13X (collectively, "NICs 13"), which each include at least one port with which to exchange packets send and receive packets over a communication link. For example, server 12A includes NIC 13A. NICs 13 provide connectivity between the server and the switch fabric. In some examples, NIC 13 includes an additional processing unit in the NIC itself to offload at least some of the processing from the host CPU (e.g., the CPU of the server that includes the NIC) to the NIC, such as for performing policing and other advanced functionality, known as the "datapath."

In some examples, each of NICs 13 provides one or more virtual hardware components for virtualized input/output (I/O). A virtual hardware component for I/O may be a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

In some examples, NICs 13 each include a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

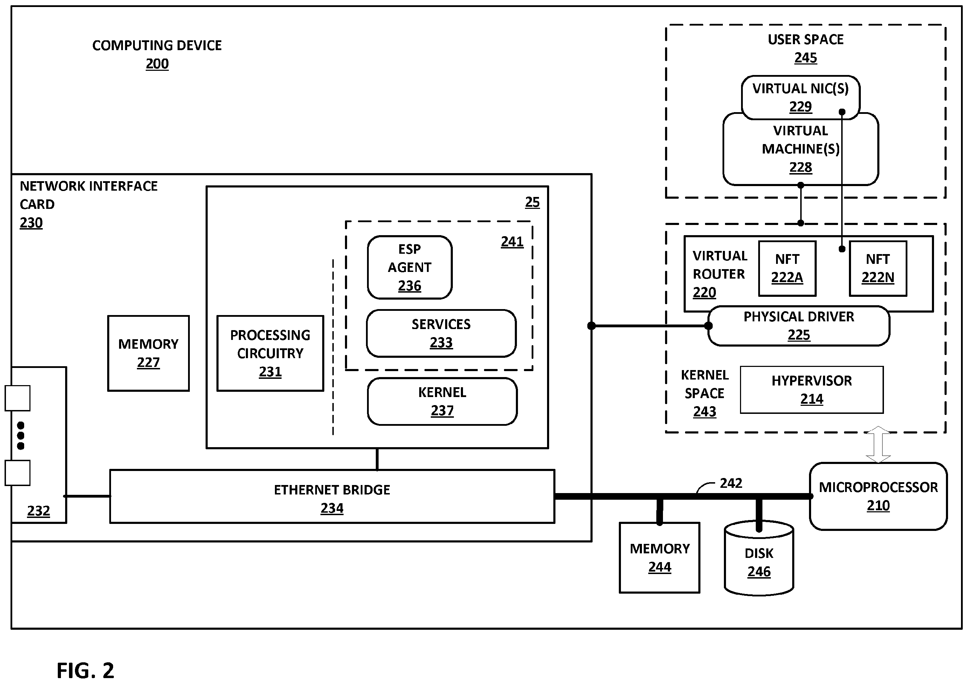

Edge services controller 28 may manage the operations of the edge services platform within NIC 13s in part by orchestrating services (e.g., services 233 as shown in FIG. 2) to be performed by processing units 25; application programming interface (API) driven deployment of services 233 on NICs 13; NIC 13 addition, deletion and replacement within the edge services platform; monitoring of services 233 and other resources on NICs 13; and management of connectivity between various services 233 running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent Application No. 14/226,509, filed March 26, 2014, and entitled "Tunneled Packet Aggregation for Virtual Networks," each of which is incorporated by reference as if fully set forth herein.

In some examples, network controller 24 or edge services controller 28 may determine the energy efficiency and/or usage of data center 10 and/or the energy efficiency and/or usage of data center 10 when deploying an application workload, and may invoke one or more actions to improve energy efficiency (e.g., save energy) of data center 10. In some examples, network controller 24 or edge services controller 28 may determine the energy efficiency and/or usage of data center 10 for workloads running on servers 12 and/or NICs 13. In some examples, network controller 24, edge services controller 28, and/or other device(s) of FIG. 1 may determine the type of energy usage, such as an amount of green energy usage and an amount of non-green energy usage associated with data center 10, a given service, a given workload, a given node, a given cluster of nodes, or the like.

## SELF-LEARNING GREEN NETWORKS

As one example, network controller 24 and/or edge services controller 28 may include an energy efficiency module 32 configured to determine the energy efficiency of the data center, referred to herein as a green quotient of a data center ($GQ_{dc}$), based on energy usage of data center 10 in relation to a percentage of energy provided by one or more renewable energy sources to the data center (g) (also referred to herein as "green energy sources") such as solar, wind, hydroelectric, etc. In the example of FIG. 1, data center 10 may obtain energy from one or more power sources 30 for data center 10. While shown inside data center 10, it should be understood that power generating equipment for power sources 30 may be located outside of data center 10. For example, a windmill or powerplant may be located outside of data center 10, but power from the windmill or powerplant may be available in data center 10 via power sources 30. Power sources 30 may include renewable (green) energy sources, non-renewable (non-green) energy sources, or a combination of renewable and non-renewable energy sources. Energy efficiency module 32 obtains telemetry data, including energy usage data of data center 10, which includes current energy usage ($E_C$) of data center 10 and total energy usage ($E_T$) of data center 10 if the data center is running at full capacity (e.g., determined from manufacturer provided information). Current energy usage data may include, for example, an amount of power currently used by one or more devices within the data center or other metric indicating energy currently being consumed. The total energy usage of data center 10 may indicate the maximum amount of power that can be used by the one or more devices if operating at maximum capacity. Energy efficiency module 32 may obtain energy usage data of data center 10 directly from servers 12 and/or network devices (e.g., chassis switches 18 and TOR switches 16) of data center 10, from a centralized controller that collects energy usage data from servers 12 and/or network devices of the data center, and/or from static information provided by manufacturers of the servers and/or network devices (e.g., maximum capacity of servers and/or compute nodes).

In some examples, energy efficiency module 32 determines a percentage of the total energy usage ($E_T$) consumed by the current energy usage ($E_C$) of data center 10, referred to herein as "energy quotient" ($E_Q$) of the data center, such as the following example below:

$$E_Q = \frac{E_C}{E_T} * 100$$

In some examples, energy efficiency module 32 compares the energy quotient ($E_Q$) of data center 10 with the percentage of energy provided by one or more renewable energy sources to the data center 10 (g) (referred to herein as "green energy percentage" of the data center). As an example of green energy percentage, if power sources 30 provides 20% of the energy from renewable energy sources and 80% of the energy from non-renewable energy sources, the percentage of energy provided by one or more renewable energy sources to the data center 10 is 20%. Based on the comparison of the energy quotient ($E_Q$) with the green energy percentage (g) of data center 10, energy efficiency module 32 may specify a value for a green quotient of data center 10 ($GQ_{dc}$) that indicates whether data center 10 is energy efficient, such as shown in the example below.

$$GQ_{dc} = \begin{cases} 101 - 101^{(\frac{E_Q - g}{100 - g})}, & E_Q > g \\ 100, & E_Q \leq g \end{cases}$$

In this example, if the energy quotient ($E_Q$) of data center 10 is less than or equal to the green energy percentage (g) of data center 10 (e.g., $E_Q \leq g$), energy efficiency module 32 specifies a value (e.g., 100) for the green quotient of data center 10 ($GQ_{dc}$) that indicates that the energy usage by data center 10 is energy efficient (e.g., "green"). For example, if 20% of energy sources provided or allocated to data center 10 are from renewable energy sources, the value of 100 specified for the green quotient of the data center, indicates the energy usage by data center 10 does not exceed the 20% of renewable energy provided or allocated to data center 10. If the energy quotient ($E_Q$) of data center 10 is greater than the green energy percentage (g) of data center 10 (e.g., $E_Q > g$), energy efficiency module 32 specifies a value (e.g.,

$101 - 101^{(\frac{E_Q - g}{100 - g})}$ ) for the green quotient of data center 10 ($GQ_{dc}$) that indicates the energy usage by data center 10 is not energy efficient (e.g., "not green"). Continuing the example described above, if 20% of energy sources provided or allocated to data center 10 are from renewable energy sources, the value (e.g., $101 - 101^{(\frac{E_Q - g}{100 - g})}$ ) for the green quotient of data center 10 indicates the energy usage by data center 10 exceeds the amount of renewable energy provided or allocated to data center 10. As can be inferred from the formula, $GQ_{dc}$ increases exponentially as the renewable energy percentage goes up from g% to 100%.

## SELF-LEARNING GREEN WORKLOADS

As another example, energy efficiency module 32 is configured to determine the energy efficiency of an application workload deployed by data center 10, referred to herein as a green quotient of an application ($GQ_{app}$). In these examples, energy efficiency module 32 obtains telemetry data, including energy usage data of data center 10, and based on the energy usage data, determines the green quotient of data center 10 when the application is running ($GQ_{dc2}$) that indicates the energy efficiency of data center 10 when the application is running, and determines the green quotient of data center 10 when the application is not running ($GQ_{dc1}$) that indicates the energy efficiency of data center 10 when the application is not running. The green quotient of data center 10 when the application is not running may represent the energy efficiency of a stable data center 10. As described above, energy efficiency module 32 may determine the green quotient of the data center based on a computation of the "energy quotient" ($E_Q$) of the data center. In this example, energy efficiency module 32 may compute the "energy quotient" ($E_Q$) of data center 10 when the application is not running. For example, energy efficiency module 32 may determine a percentage of the total energy usage ($E_T$) consumed by the current energy usage *(Ec)* of data center 10 when the application is not running, and determine the green quotient of the data center when the application is not running ($GQ_{dc1}$) based on a computation of the "energy quotient" ($E_Q$) of data center 10 when the application is not running. Energy efficiency module 32 may also determine a percentage of the total energy usage ($E_T$) consumed by the current energy usage ($E_C$) of data center 10 when the application is running, and determine the green quotient of the data center when the application is running ($GQ_{dc2}$) based on a computation of the "energy quotient" ($E_Q$) of data center 10 when the application is running. In some examples, the green quotient of the data center when the application is running ($GQ_{dc2}$) may represent an average of green quotients computed for data center 10 when the application is running over a period of time.

Energy efficiency module 32 computes a delta ($GQ_\Delta$) of the green quotient of data center 10 when the application is running ($GQ_{dc2}$) and the green quotient of data center 10 when the application is not running ($GQ_{dc1}$) to determine the energy usage of the application, as shown in the example below.

$$GQ_\Delta = GQ_{dc2} - GQ_{dc1}$$

Energy efficiency module 32 then compares the energy usage of the application (e.g., $GQ_A$) with the green energy percentage (g) of data center 10, and based on that comparison, specifies a value for green quotient of the application ($GQ_{app}$) that indicates whether data center 10 deploying the application is energy efficient, such as shown in the example below.

$$GQ_{app} = \begin{cases} GQ_A, & GQ_A > g \\ 100, & GQ_A \le g \end{cases}$$

In this example, if the energy usage of the application is less than or equal to the green energy percentage of data center 10 (e.g., $GQ_A \le g$), energy efficiency module 32 specifies a value (e.g., 100) for the green quotient of the application ($GQ_{app}$) that indicates data center 10 deploying the application is energy efficient. For example, if 20% of energy sources provided or allocated to data center 10 are from renewable energy sources, the value of 100 specified for the green quotient of the application indicates the energy usage by data center 10 that deploys the application does not exceed the 20% of renewable energy provided or allocated to data center 10. If the energy usage of the application is greater than the percentage of energy provided by one or more renewable energy sources to the data center (e.g., $GQ_A > g$), energy efficiency module 32 specifies a value (e.g., $GQ_A$) for the green quotient of the application ($GQ_{app}$) that indicates data center 10 deploying the application is not energy efficient. Continuing the example described above, if 20% of energy sources provided or allocated to data center 10 are from renewable energy sources, the value of not 100 specified for the green quotient of the application indicates the energy usage by data center 10 that deploys the application exceeds the 20% of renewable energy provided or allocated to data center 10.

Based on the green quotient of the application ($GQ_{app}$), energy efficiency module 32 invoke one or more actions to affect the green quotient of the application. For example, if the green quotient of the application not meeting a green energy SLA requirement (e.g., the green quotient is lower than the green energy SLA requirement), energy efficiency module 32 may attempt to reschedule the workload to a greener or green node to improve the green quotient of the application.

The above action is merely an example. Energy efficiency module 32 may perform other actions, such as alerting an administrator that data center 10 deploying the application workload is not energy efficient and, in some example, provide a recommended action to improve the green quotient of the application.

Workloads of various services may be executing on any of servers 12 and/or NICs 13. Servers 12 and NICs 13 may sometimes be referred to as nodes. When demand for a service changes, network controller 24 may determine to scale up or scale down the service based on the demand, available resources, and/or the like. This may be referred to as a scale event. For example, network controller 24 may predict an occurrence of a scale event for a first service. For example, demand for a first service may increase and network controller 24 may decide to increase a number of replicas (e.g., workloads) of the first service. Network controller 24 may determine, based on the predicted occurrence of the scale event for the first service, a predicted level of greenness for the first service. This predicted level of greenness may be based on a current level of greenness for the first service and a predicted scale up factor. Network controller 24 may determine whether the predicted level of greenness for the first service satisfies a first threshold. Network controller may perform an action on the first workload based on whether the predicted level of greenness for the first service satisfies the first threshold. For example, network controller 24 may reschedule the workload to another node (e.g., a non-green node or a green node) or allow the workload to continue executing on the same node.

FIG. 2 is a block diagram illustrating an example computing device according to techniques described herein. Computing device 200 of FIG. 2 may represent network controller 24, edge services controller 28, or may represent an example instance of any of servers 12 of FIG. 1. Computing device 200 includes in this example, a bus 242 coupling hardware components of a computing device 200 hardware environment. Bus 242 couples SR-IOV-capable network interface card (NIC) 230, storage disk 246, and microprocessor 210. A frontside bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Memory device 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Memory device 244 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory device 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as containers (e.g., a DOCKER container) may implement virtual network endpoints. An operating system kernel (not shown in FIG. 2) may execute in kernel space 243 and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228 of user space 245. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use the physical function provided by network interface card 230. In some cases, network interface card 230 may also implement SR-IOV to enable sharing the physical network function (I/O) among virtual machines. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of the virtual machines as a dedicated NIC. Virtual functions may represent lightweight PCIe functions that share physical resources with the physical function and with other virtual functions. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory device 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge 234 which may include an embedded switch. Ethernet bridge 234 may perform layer 2 forwarding between virtual functions and physical functions of NIC 230. Ethernet bridge 234 thus in some cases provides hardware acceleration, via bus 242, of inter-virtual machine packet forwarding and of packet forwarding between hypervisor 214, which accesses the physical function via physical driver 225, and any of the virtual machines. Ethernet bridge 234 may be physically separate from processing unit 25.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses a physical function for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

An edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel may be a Linux kernel, a Unix or BSD kernel, a real-time operating system (OS) kernel, or other kernel for managing hardware resources of processing unit 25 and managing user space 241.

Services 233 may include network, security, storage, data processing, co-processing, machine learning or other services, such as energy efficiency services, in accordance with techniques described in this disclosure. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network, computing device 200 or network resource availability, resource availability of resources of processing unit 25 (such as memory or core utilization), and/or resource energy usage. As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuring services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231. In some examples, edge services controller 28 may invoke one or more actions to improve energy usage of data center 10 via managing the operations of processing unit 25. In some examples, edge services controller 28 may set a target green quotient for processing unit 25 that causes processing unit 25 to select or adjust a particular routing or tunnel protocol, particular algorithm, maximum transmission unit (MTU) size, interface, and/or any of services 233.

In some examples, virtual machine(s) 228 may execute a number of different workloads, for example, workloads of a plurality of services. Energy efficiency module 32 may obtain telemetry data, including workload data, energy usage data, emissions data, etc., of computing device 200. Energy efficiency module 32 may use the telemetry data to predict an occurrence of a scale event for a service and/or to determine a predicted level of greenness for the service. Energy efficiency module 32 may compare the predicted level of greenness for the service to a threshold and, based on the comparison, determine an action to perform on a workload of the service.

Carbon-aware predictive workload scheduling and scaling techniques are now described, such as those performable by energy efficiency module 32. Generally, the workloads of micro services running within a Kubernetes cluster are automatically scaled horizontally by auto scalers based on workload compute resource metrics, custom metrics, and external metrics. Typically, these auto scalers increase the number of replicas of a workload when the load increases and decrease the number of replicas of the workload when the load decreases by a scale factor.

Some scaling and scheduling algorithms exist which consider carbon emissions while making scaling and scheduling decisions. Most of these schedulers attempt to schedule the scaled-up workloads on to greener nodes which have a renewable energy supply and have low carbon emission rates. When there are no greener nodes available, such schedulers may schedule the scaled-up workloads to non-green nodes which have a power source generated by fossil fuels.

However, there are problems associated with these kinds of carbon-aware schedulers. First, such carbon-aware schedulers cause a high number of reschedules of running workloads when the services scale. This increases scheduling costs. Second, such carbon-aware schedulers may cause some services to starve for greener nodes and the services may end up failing to meet their carbon emission and green quotient SLA goals. High compute intensive and high-power consumption services are especially prone to such a starvation problem. This problem may cause a service owner and/or infrastructure provider to limit the carbon emission rate and greenness goals, which may be undesirable. Third, such carbon-aware schedulers may cause a high level of service disruptions due to frequent reschedules. This high level of service disruptions may cause service owners to fail to meet functional SLA goals.

To solve the problems of current carbon-aware schedulers, the techniques of this disclosure include a proactive and predictive approach to predict the scaling requirements of services using machine learning techniques. For example, energy efficiency module 32 may proactively reschedule at least a portion of the high green workloads to non-greener nodes before (e.g., just before or within a predetermined period of time before) a predicted scale occurs to reserve or make required resources readily available. Such a proactive reschedule may reduce the high number of reschedules which may otherwise occur due to reactive scaling. High-green workloads may be workloads of services which satisfy green SLA goals well above the SLA limit (e.g., more than a user definable amount higher than a respective SLA goal). For example, a workload may be running on 100% green power, while the SLA associated with the workload may require a 50% use of green power. An example user definable amount may be 20%. Because 100% is higher than 70% (50% + 20%), the workload may be considered a high-green workload, and in some examples, may be rescheduled.

In particular, the prediction and proactive re-scheduling techniques of this disclosure may help high energy consuming services reserve slots in the greener nodes and thereby increase their green quotient as well as reduce their overall carbon emission rate. In some examples, when two services are both predicted for scaling, a current green quotient (e.g., $GQ_{app}$ as described above) or carbon emission metric may be used as a tiebreaker. For example, the service having low green quotient (e.g., indicating the service is not energy efficient) or higher carbon emissions may get priority over the other service.

In some examples, a computing device, such as network controller 24, may utilize a predictive technique when making scaling and scheduling decisions to better comply with service level green energy SLAs. For example, a computing device may determine an energy metric, such as a green quotient (GQ). This GQ may be indicative of green energy consumption by a particular service.

For example, GQ may be determined as follows:

$$GQ = (\text{Green Energy Consumption} / \text{Total Energy Consumption}) * 100$$

As such, GQ may range between 0 and 100. For example, when all workloads of a service are always scheduled to run on non-green nodes, the GQ of the service will be 0 and when all workloads of a service are always scheduled to run on green nodes, the GQ of the service will be 100. When workloads of a service are scheduled across non-green nodes and green nodes, the GQ of the service will be somewhere between 0-100. The GQ of a service may be calculated periodically and exported or sent to another computing device, if so desired.

In some examples, network controller 24 may determine the GQ of workload considering its current lifetime. That means, GQ calculation begins when a first workload is spawned and ends when last workload is taken down. In some examples, the system determines the GQ of the workload continuously as long as service is alive with at least one replica running.

Additionally, network controller 24 may periodically collect or determine a workload/service scale replica count and Green Quotient metrics. For example, for a backup service which may run primarily at night, during the day a service replica count may be 2, and may increase up to 10 gradually later in the night.

The techniques of this disclosure may use a time series forecasting machine learning model to forecast a replica count of a service for the next T time unit(s). T may be a number of minutes, hours, etc. The techniques of this disclosure may periodically iterate over services/workloads to compare their GQ values against a preconfigured Service Level Agreement (SLA) value for each service.

In some examples, when a predicted scale for a service is no scale up (no new replicas are expected to be spawned in the next T time unit(s)), or the predicted scale is a scale down (the number of replicas is expected to shrink in the next T time unit(s)), network controller 24 may determine whether a service's GQ value satisfies (e.g., is greater than, or greater than or equal to) a threshold. The threshold may be equal to a corresponding GQ SLA value plus a user defined amount. In some examples, if the service's GQ value satisfies the threshold, network controller 24 may reschedule, or recommend to a scheduler that the scheduler reschedule, the workload to a non-green node. In some examples, if the service's GQ value does not satisfy the threshold, network controller 24 may allow the workload to continue in the current schedule state. In other words, network controller 24 may not reschedule the workload.

In some examples, when a predicted scale for a service is a scale up (new replicas are expected to be spawned in the next T time unit(s)), network controller 24 may determine whether a service's predicted GQ value satisfies a threshold based on its corresponding GQ SLA value. If the service's GQ value satisfies the threshold, network controller 24 may reschedule, or recommend that the scheduler reschedule, the workload to a non-green node. If the service's GQ value does not satisfy the threshold, network controller 24 may recommend the scheduler reschedule the workload to a green node.

As such, the techniques of this disclosure may ensure or improve the likelihood that service will not starve for greener nodes. For example, the techniques of this disclosure may only reschedule workloads whose GQ is well above or well below a specified threshold (e.g., at least a user defined amount above an associated GQ SLA value or at least a user defined amount below an associated GQ SLA value).

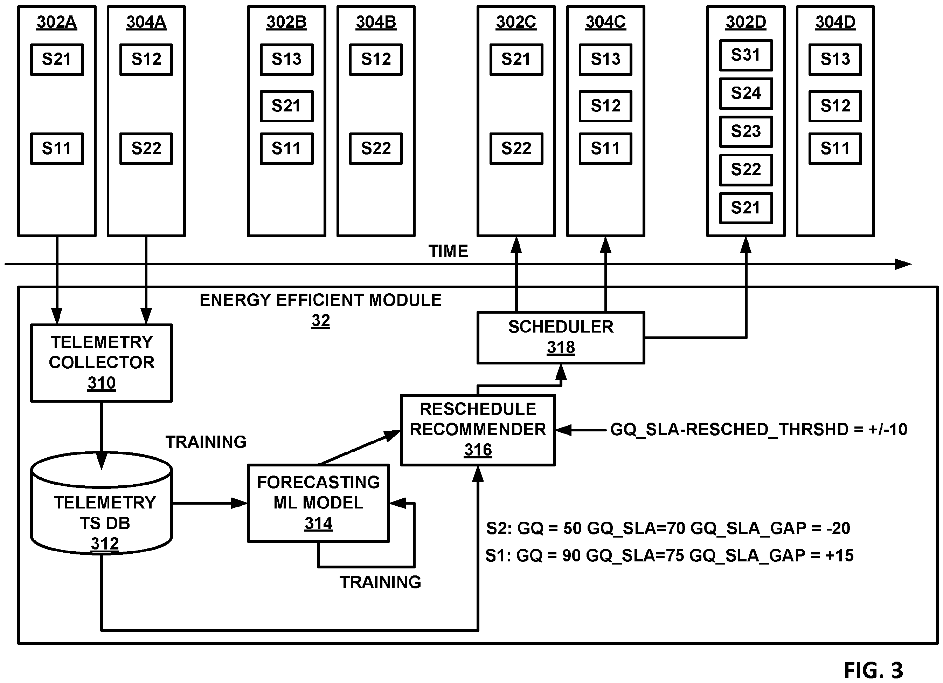

FIG. 3 is a conceptual diagram illustrating a system for carbon-aware predictive workload scheduling and scaling according to one or more aspects of this disclosure. In the example of FIG. 3, nodes 302A-302D represent a single node 302 at different times and node 302 represents a green node. Similarly, nodes 304A-304D represent a single node 304 at different times and node 304 represents a non-green node. Together, nodes 302 and 304 may represent a cluster. Energy efficiency module 32 is depicted as including telemetry collector 310, telemetry time series database 312, forecasting machine learning model 314, reschedule recommender 316, and scheduler 318.

For example, at time A, node 302 (shown as node 302A) executes a number of workloads as depicted by service 2 workload 1 (S21) and service 1 workload 1 (S11). At time A, node 304 (shown as node 304A) executes a number of workloads as depicted by service 1 workload 2 (S12) and service 2 workload 2 (S22). Workloads of a service may sometimes be referred to as replicas. The workloads shown in FIG. 3 are shown as examples and different numbers or types of workloads may be implemented than those shown.

Telemetry collector 310 may collect telemetry data from nodes 302 and 304. For example, telemetry collector 310 may collect GQ data and scale factor (SF) data in telemetry data from nodes 302 and 304. SF data may indicate how many replicas of each workload may be running on nodes 302 and 304. For example, node 302A may indicate in telemetry data to telemetry collector 310 that one replica of service 1 is running and one replica of service 2 is running. Node 304A may similarly indicate in telemetry data to telemetry collector 310 that one replica of service 1 is running and one replica of service 2 is running. Nodes 302A and 304A may also indicate their corresponding GQs in telemetry data to telemetry collector 310. For example, node 302A may indicate a GQ of 100, while node 304A may indicate a GQ of 0. It should be noted, that in other examples, one or more of nodes 302 or 304 may be a grey node (e.g., being powered by a combination of green and non-green power sources) and have a GQ of somewhere between 0 and 100. It should be noted, in cases where GQ is not directly reported in telemetry data, a computing device, of according to the techniques of this disclosure, may determine a GQ for a node or an application based on reported carbon emission data.

Telemetry time series database 312 may store the telemetry data collected by telemetry collector 310. Forecasting machine learning model 314 may predict scaling for service 1 and service 2 using data stored in telemetry time series database 312, such as the SF data associated with service 1 and service 2 and the GQ data associated with node 302 and node 304. It should be noted that predictions made by forecasting machine learning model 314, together with additional telemetry data collected by telemetry collector 310 associated with timeframes of the predictions, may be used to train forecasting machine learning model 314 as time goes by such that forecasting machine learning model 314 may be continually trained. Such training may be unsupervised or supervised. In the example of FIG. 3, forecasting machine learning model 314 may predict a total of 3 replicas for S1 (S11-S13) and a total of 4 replicas for S2 (S21-S24).

Reschedule recommender 316 may be configured to, based on predictions from forecasting machine learning model 314, determine any rescheduling recommendations. For example, reschedule recommender 316 may obtain GQ data from telemetry time series database 312 and GQ requirements from SLAs for service 1 and service 2. In some examples, the GQ SLA requirements may be stored in telemetry time series database 312. In some examples, the GQ SLA requirements may be stored elsewhere in the system. In either event, reschedule recommender 316 may determine an SLA gap for both service 1 and for service 2. For example, GQ of service 1 may be 90, and GQ of service 2 may be 50. The GQ SLA of service 1 may be 75 and the GQ SLA of service 2 may be 70. In this example, reschedule recommender 316 may determine a difference or a GQ SLA gap for service 1 of +15 (e.g., GQ of 90 - GQ SLA of 75 = 15). As such, the GQ of service 1 is 15 greater than the GQ SLA of service 1. In other words, service 1 is more green than required by the SLA for service 1. Reschedule recommender 316 may determine a difference or a GQ SLA gap for service 2 of -20 (e.g., GQ of 50 - GQ SLA of 70 = -20). As such, the GQ of service 2 is 20 less than the GQ SLA of service 2. In other words, service 2 is less green than required by the SLA for service 2 and the SLA for service 2 is being breached. Reschedule recommender 316 may obtain, for example, from a configuration file, a GQ SLA reschedule threshold. The GQ SLA reschedule threshold may be a threshold used to determine whether or not to reschedule a workload. For example, reschedule recommender may obtain a GQ SLA reschedule threshold of +/- 20, +/- 10, or the like.

A new replica for service 1 (S13) may be brought up at time B as shown in node 302B. Reschedule recommender 316 may determine that the GQ SLA gap of service 1 of +15 exceeds the GQ SLA reschedule threshold of +/- 10 and may recommend to scheduler 318, that scheduler 318 reschedules S11 and/or S13 to run on node 304 rather than run on node 302. This is reflected in nodes 302C and 304C. For example, scheduler 318 may reschedule S11 and/or S13 at time C. Rescheduling S11 and/or S13 from a green node (e.g., node 302) to a non-green node (e.g., node 304) may reduce the GQ of service 1, but the GQ of service 1 was well above (e.g., more than the GQ SLA reschedule threshold above) the GQ SLA for service 1. As such, scheduler 318 may free up green resources on node 302, while still maintaining the GQ SLA for service 1. It should be noted that these techniques may be repeated periodically, and as such, even if both S11 and S13 are rescheduled to node 304, the system may eventually reschedule workloads again based on these techniques.

Reschedule recommender 316 may also determine that the GQ SLA gap of service 2 of -20 exceeds the GQ SLA reschedule threshold of +/- 10 and may recommend to scheduler 318, that scheduler 318 reschedule S22 to run on node 302 rather than run on node 304. This is also reflected in nodes 302C and 304C. For example, scheduler 318 may reschedule S22 at time C. Rescheduling S22 from a non-green (e.g., node 304) to a green node (e.g., node 302) may improve the GQ of service 2, in an attempt to bring up the GQ of service 2 to meet the GQ SLA of service 2.

Forecast machine learning model 314 may predict that new replicas S23, S24, and S31 are to be brought up by time D. Because new service 2 replicas are brought up and the GQ of service 2 may still not satisfy the GQ SLA for service 2 of 70 or because the GQ SLA gap of service 2 may still exceed the GQ SLA threshold, scheduler 318 may schedule new replicas S23 and S24 on a green node (e.g., node 302). A new workload for a new service (S31) may be brought up and scheduler 318 may also schedule S31 on a green node, assuming there are sufficient resources to do so, as service 3 may also have a corresponding GQ SLA which would not be met if S31 were brought up on a non-green node.

It should be noted that any of, or all of, telemetry collector 310, telemetry time series database 312, forecasting machine learning model 314, reschedule recommender 316, and/or scheduler 318 may be implemented in network controller 24 and/or edge services controller 28 of FIG. 1.

An example reschedule recommender algorithm is set forth below.

Function: Reschedule Recommendation

Input:

Map<WorkloadID, Predicted Replica Count>

Map<WorkloadID, GQ>

Map<WorkloadID, {GQ_SLA, GQ_SLA_RESCHED_THRESHOLD}>

Green Compute Nodes Count (NCg)

Total Compute Nodes Count(NCt)

Output:

Map<NodeType, List of Workloads> where NodeType={Green | Black}

Definition:

{

    FOR each workload W in Workloads:

        ScaleFactor(SF) = (Current Replica Count/Predicted Replica Count)

        IF (SF <=1): // when either no scale or scale down

            IF ( GQ_SLA – GQ > GQ_SLA_RESCHED_THRESHOLD): // Workload GQ is well above threshold or Thick Greener

                // Add workload W to Black Nodes list

            ELSE:

                // Add workload W to current Node list

            ENDIF

        ELSE:

            // when scale up is predicted

            GreenNodeRatio(GNR) = NCg / NCt

            PredictedGreenQuotient (GQp) = (Current Green Quotient / Scale Factor) * GreenNodeRatio(GNR)

            IF ( GQp > ( GQ_SLA + GQ_SLA_RESCHED_THRESHOLD)): // Predicted GQ is well above threshold or Thick Greener

                // Add workload W to Black Nodes list

            ELSE:

                // Green Quotient of this workload is going to be well below threshold, try move workloads to Green nodes

                // Add workload W to Green Node list

            ENDIF

        ENDIF

}

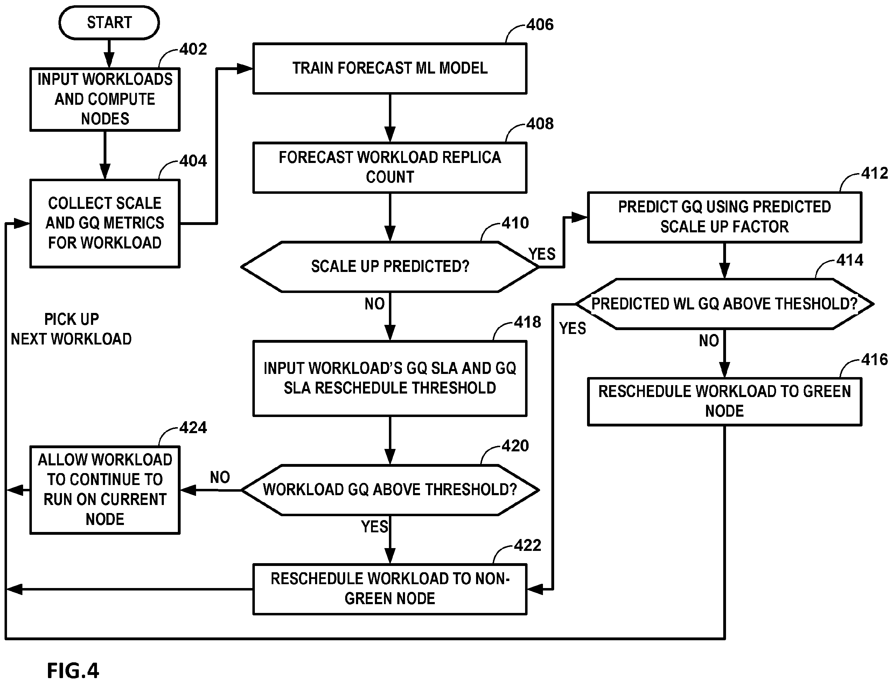

FIG. 4 is a flow diagram illustrating example techniques for carbon-aware workload scheduling and scaling according to one or more aspects of this disclosure. The techniques of FIG. 4 are described with respect to network controller 24 of FIG. 1, but may be performed by edge services controller 28, and/or any other device capable of performing such techniques. An administrator may input workloads and compute nodes information (402). For example, the administrator may input into network controller 24 service 1 workloads and service 2 workloads. The administrator may also input nodes 302 and 304.

Network controller 24 may collect scale and GQ metrics for the workloads (404). For example, network controller 24 may collect historical scale data indicative of the number of workload replicas for each service that may be up at different times and GQ metrics which can be used to determine a GQ of a service over time. Network controller 24 may train forecast machine learning model 314 (406). For example, network controller 24 may train forecast machine learning model 314 using the historical scale metrics, and in some examples, GQ metrics, which may be used to predict future scaling of workloads.

Network controller 24 may forecast a workload replica count (408). For example, network controller 24 may execute forecast machine learning model 314 to forecast the workload replica count. Network controller 24 may determine whether a scale up is predicted (410). For example, network controller 24 may determine whether more replicas of the workload are expected to be spawned in a particular time period. If network controller 24 determines that scale up is predicted (the "YES" path from box 410), network controller 24 may predict a GQ for the service using the predicted scale up factor (412). For example, network controller 24 may predict a GQ based on the workload being scaled up as predicted on available compute node resources.

Network controller 24 may determine whether the predicted GQ will exceed the GQ SLA reschedule threshold (414). For example, network controller 24 may determine that the predicted GQ will cause the GQ SLA gap to exceed the GQ SLA reschedule threshold. If the predicted GQ will exceed the GQ SLA reschedule threshold (the "YES" path from box 414), network controller 24 may reschedule the workload to a non-green node (422). If the predicted GQ will not exceed the GQ SLA reschedule threshold (the "NO" path from box 414), network controller 24 may reschedule the workload to a green node (416).

Referring now back to box 410, if network controller 24 does not predict a scale up (the "NO" path from box 410), network controller 24 may obtain the workload's GQ SLA and the GQ SLA reschedule threshold (418). For example, the GQ SLA and the GQ SLA reschedule threshold may be input to network controller 24 by an administrator.

Network controller 24 may determine whether a workload GQ exceeds the GQ SLA reschedule threshold (420). If the GQ exceeds the GQ SLA reschedule threshold (the "YES" path from box 420), network controller 24 may reschedule the workload to a non-green node (422). If the GQ does not exceed the GQ SLA reschedule threshold (the "NO" path from box 420), network controller 24 may allow the workload to continue to run on a current node (424). In some examples, network controller 24 may do this for each workload.

In some examples, network controller 24 may treat new replicas during the prediction time period (e.g., time period T) in the same manner as a workload described above. In some examples, rather than reschedule or schedule a workload to a green node, network controller 24 may reschedule or schedule the workload to a greener node than a current node on which the workload is scheduled. In some examples, rather than reschedule or schedule a workload to a non-green node, network controller 24 may reschedule or schedule the workload to a less green node than a current node on which the workload is scheduled.

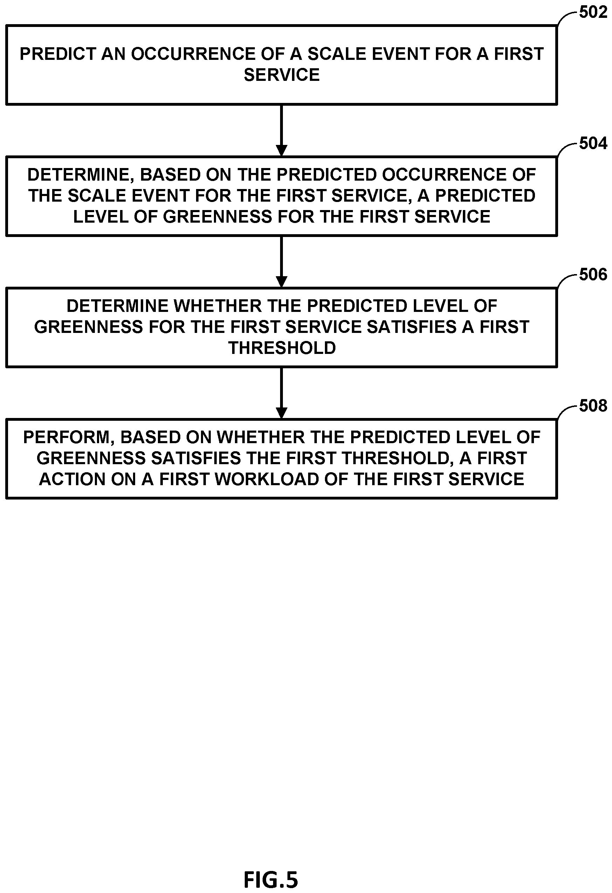

FIG. 5 is a flow diagram illustrating further example techniques for carbon-aware workload scheduling and scaling according to one or more aspects of this disclosure. While the example of FIG. 5 is described with respect to network controller 24, the techniques of FIG. 5 may be performed by network controller 24, edge services controller 28, and/or any other device capable of performing such techniques.

Network controller 24 may predict an occurrence of a scale event for a first service (502). For example, network controller 24 may execute a machine learning model and determine that a predicted number of workloads for the first service in a next T time period (e.g., a number of minutes, hours, days, etc.) is greater than a current number of workloads of the first service, which may indicate a scale up for the first service event is likely or expected in the next T time period.

Network controller 24 may determine, based on the predicted occurrence of the scale event for the first service, a predicted level of greenness for the first service, the predicted level of greenness being based on a current level of greenness for the first service and a predicted scale up factor (504). For example, network controller 24 may determine the current level of greenness for the first service, such as $GQ_{app}$ for the first service. Network controller 24 may predict a predicted level of greenness based on where additional replicas are predicted to be scheduled (e.g., on green nodes or on non-green nodes) and the current level of greenness. For example, if all additional replicas are predicted to be scheduled on a green node, the predicted level of greenness may be higher than the current level of greenness. For example, if the first service has 3 workloads currently scheduled on non-green nodes and no workloads currently scheduled on green nodes, the current level of greenness for the first service may be 0%. If two additional replicas are predicted to be scheduled and both are predicted to be scheduled on green nodes, the predicted level of greenness for the first service may be 2/5 or 40%.

Network controller 24 may determine whether the predicted level of greenness for the first service satisfies a first threshold (506). For example, the first threshold may be based on a green SLA requirement for the first service, e.g., 50%. For example, the first threshold may be equal to the green SLA requirement for the first service plus some user definable amount or percentage, e.g., 15%. In such an example, the first threshold may equal 50% + 15% or 65%.

Network controller 24 may perform, based on whether the predicted level of greenness for the first service satisfies the first threshold, a first action on a first workload of the first service (508). For example, if the predicted level of greenness for the first service satisfies the first threshold, the first action may include rescheduling the first workload to a non-green node. If the predicted level of greenness for the first service does not satisfy the first threshold, the first action comprises rescheduling the first workload to a green node. As used in this context, satisfying a threshold may mean being greater than the first threshold or being greater than or equal to the first threshold. In other contexts, satisfying a threshold may mean being less than or being less than or equal to the threshold.

In some examples, to predict the occurrence of the scale event for the first service, network controller 24 may to execute a machine learning model. In some examples, to predict the occurrence of the scale event for the first service, network controller 24 may predict a workload replica count for the first service and determine that the predicted workload replica count for the first service is higher than a current workload replica count for the first service. In some examples, the predicted scale up factor is based on the predicted workload replica count for the first service and the current workload replica count for the first service.

In some examples, the first threshold is based on a service level agreement requirement applicable to the first service.

In some examples, network controller 24 may predict the absence of a scale event for a second service. In some examples, network controller 24 may determine, based on the predicted absence of the scale event for the second service, a current level of greenness of the second service. In some examples, network controller 24 may determine whether the current level of greenness satisfies a second threshold. In some examples, network controller 24 may perform, based on whether the current level of greenness satisfies the second threshold, a second action on a second workload of the second service. In some examples, the current level of greenness satisfies the threshold, and the second action includes rescheduling the second workload to a non-green node. In some examples, the current level of greenness does not satisfy the threshold, and the second action includes allowing the second workload to continue to run on a current node.

In some examples, network controller 24 may predict an occurrence of a scale event for a second service. In some examples, network controller 24 may determine, based on the predicted occurrence of the scale event for the second service, a predicted level of greenness for the second service, the predicted level of greenness for the second service being based on a current level of greenness for the second service and a predicted scale up factor for the second service. In some examples, network controller 24 may compare, the predicted level of greenness for the first service to the predicted level of greenness for the second service. In some examples, network controller 24 may assign a first priority to the first service and second priority to the second service for use in scaling based on the comparison. In some examples, the first priority is lower than the second priority. In some examples, network controller 24 may reserve, based on the first priority and the second priority, one or more to non-green or less-green resources for one or more replicas of the first service. In some examples, network controller 24 may move, based on the first priority and the second priority, the first workload to non-green or less-green resources and reserve vacated green resources for one or more replicas of a second workload of the second service.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. A computer-readable medium may take the form of a computer readable data storage medium and/or a computer readable transmission medium.

For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache). The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described example techniques and devices for scheduling workloads. An example computing device is configured to predict an occurrence of a scale event for a first service. The computing device is configured to determine, based on the predicted occurrence of the scale event for the first service, a predicted level of greenness for the first service, the predicted level of greenness being based on a current level of greenness for the first service and a predicted scale up factor. The computing device is configured to determine whether the predicted level of greenness for the first service satisfies a first threshold. The computing device is configured to perform, based on whether the predicted level of greenness for the first service satisfies the first threshold, a first action on a first workload of the first service.

Further examples are set out in the following numbered clauses.

Clause 1. A computing device comprising: one or more memories; one or more processors communicatively coupled to the one or more memories, the one or more processors being configured to: predict an occurrence of a scale event for a first service; determine, based on the predicted occurrence of the scale event for the first service, a predicted level of greenness for the first service, the predicted level of greenness being based on a current level of greenness for the first service and a predicted scale up factor; determine whether the predicted level of greenness for the first service satisfies a first threshold; and perform, based on whether the predicted level of greenness for the first service satisfies the first threshold, a first action on a first workload of the first service.

Clause 2. The computing device of clause 1, wherein the predicted level of greenness for the first service satisfies the first threshold, and wherein the first action comprises rescheduling the first workload to a non-green node.

Clause 3. The computing device of clause 1, wherein the predicted level of greenness for the first service does not satisfy the first threshold, and wherein the first action comprises rescheduling the first workload to a green node.

Clause 4. The computing device of any of clauses 1-3, wherein to predict the occurrence of the scale event for the first service, the one or more processors are configured to execute a machine learning model.

Clause 5. The computing device of any of clauses 1-4, wherein to predict the occurrence of the scale event for the first service, the one or more processors are configured to: predict a workload replica count for the first service; and determine that the predicted workload replica count for the first service is higher than a current workload replica count for the first service.

Clause 6. The computing device of clause 5, wherein the predicted scale up factor is based on the predicted workload replica count for the first service and the current workload replica count for the first service.

Clause 7. The computing device of any of clauses 1-6, wherein the first threshold is based on a service level agreement requirement applicable to the first service.

Clause 8. The computing device of any of clauses 1-7, wherein the one or more processors are further configured to: predict an absence of a scale event for a second service; determine, based on the predicted absence of the scale event for the second service, a current level of greenness of the second service; determine whether the current level of greenness satisfies a second threshold; and perform, based on whether the current level of greenness satisfies the second threshold, a second action on a second workload of the second service.

Clause 9. The computing device of clause 8, wherein the current level of greenness satisfies the second threshold, and wherein the second action comprises rescheduling the second workload to a non-green node.

Clause 10. The computing device of clause 8, wherein the current level of greenness does not satisfy the second threshold, and wherein the second action comprises allowing the second workload to continue to run on a current node.

Clause 11. The computing device of any of clauses 1-7, wherein the one or more processors are further configured to: predict an occurrence of a scale event for a second service; determine, based on the predicted occurrence of the scale event for the second service, a predicted level of greenness for the second service, the predicted level of greenness for the second service being based on a current level of greenness for the second service and a predicted scale up factor for the second service; compare, the predicted level of greenness for the first service to the predicted level of greenness for the second service; and assign a first priority to the first service and a second priority to the second service for use in scaling based on the comparison.

Clause 12. The computing device of clause 11, wherein the first priority is lower than the second priority, and wherein the one or more processors are further configured to reserve, based on the first priority and the second priority, one or more non-green or less-green resources for one or more replicas of the first service.

Clause 13. The computing device of clause 11, wherein the first priority is lower than the second priority, and wherein the one or more processors are further configured to move the first workload to non-green or less-green resources and reserve vacated green resources for one or more replicas of a second workload of the second service.

Clause 14. A method comprising: predicting, by one or more processors, an occurrence of a scale event for a first service; determining, by the one or more processors and based on the predicted occurrence of the scale event for the first service, a predicted level of greenness for the first service, the predicted level of greenness being based on a current level of greenness for the first service and a predicted scale up factor; determining, by the one or more processors, whether the predicted level of greenness for the first service satisfies a first threshold; and performing, by the one or more processors and based on whether the predicted level of greenness for the first service satisfies the first threshold, a first action on a first workload of the first service.

Clause 15. The method of clause 14, wherein the predicted level of greenness for the first service satisfies the first threshold, and wherein the first action comprises rescheduling the first workload to a non-green node.

Clause 16. The method of clause 14, wherein the predicted level of greenness for the first service does not satisfy the first threshold, and wherein the first action comprises rescheduling the first workload to a green node.

Clause 17. The method of any of clauses 14-16, wherein predicting the occurrence of the scale event for the first service comprises: predicting a workload replica count for the first service; and determining that the predicted workload replica count for the first service is higher than a current workload replica count for the first service.

Clause 18. The method of clause 17, wherein the predicted scale up factor is based on the predicted workload replica count for the first service and the current workload replica count for the first service.

Clause 19. The method of any of clauses 14-18, further comprising: predicting, by the one or more processors, the absence of a scale event for a second service; determining, by the one or more processors and based on the predicted absence of the scale event for the second service, a current level of greenness of the second service; determining, by the one or more processors, whether the current level of greenness satisfies a second threshold; and performing, by the one or more processors and based on whether the current level of greenness satisfies the second threshold, a second action on a second workload of the second service.

Clause 20. A computer-readable medium comprising instructions which, when executed, cause one or more processors to: predict an occurrence of a scale event for a first service; determine, based on the predicted occurrence of the scale event for the first service, a predicted level of greenness for the first service, the predicted level of greenness being based on a current level of greenness for the first service and a predicted scale up factor; determine whether the predicted level of greenness for the first service satisfies a first threshold; and perform, based on whether the predicted level of greenness for the first service satisfies the first threshold, a first action on a first workload of the first service.

**Claims**

1. A computing device comprising:

   one or more memories;
   one or more processors communicatively coupled to the one or more memories, the one or more processors being configured to:

   predict an occurrence of a scale event for a first service;
   determine, based on the predicted occurrence of the scale event for the first service, a predicted level of greenness for the first service, the predicted level of greenness being based on a current level of greenness for the first service and a predicted scale up factor;
   determine whether the predicted level of greenness for the first service satisfies a first threshold; and
   perform, based on whether the predicted level of greenness for the first service satisfies the first threshold, a first action on a first workload of the first service.

2. The computing device of claim 1, wherein the predicted level of greenness for the first service satisfies the first threshold, and wherein the first action comprises rescheduling the first workload to a non-green node.

3. The computing device of claim 1, wherein the predicted level of greenness for the first service does not satisfy the first threshold, and wherein the first action comprises rescheduling the first workload to a green node.

4. The computing device of any of claims 1-3, wherein to predict the occurrence of the scale event for the first service, the one or more processors are configured to execute a machine learning model.

5. The computing device of any of claims 1-4, wherein to predict the occurrence of the scale event for the first service, the one or more processors are configured to:

predict a workload replica count for the first service; and
determine that the predicted workload replica count for the first service is higher than a current workload replica count for the first service.

6. The computing device of claim 5, wherein the predicted scale up factor is based on the predicted workload replica count for the first service and the current workload replica count for the first service.

7. The computing device of any of claims 1-6, wherein the first threshold is based on a service level agreement requirement applicable to the first service.

8. The computing device of any of claims 1-7, wherein the one or more processors are further configured to:

predict an absence of a scale event for a second service;
determine, based on the predicted absence of the scale event for the second service, a current level of greenness of the second service;
determine whether the current level of greenness satisfies a second threshold; and
perform, based on whether the current level of greenness satisfies the second threshold, a second action on a second workload of the second service.

9. The computing device of claim 8, wherein the current level of greenness satisfies the second threshold, and wherein the second action comprises rescheduling the second workload to a non-green node.

10. The computing device of claim 8, wherein the current level of greenness does not satisfy the second threshold, and wherein the second action comprises allowing the second workload to continue to run on a current node.

11. The computing device of any of claims 1-7, wherein the one or more processors are further configured to:

predict an occurrence of a scale event for a second service;
determine, based on the predicted occurrence of the scale event for the second service, a predicted level of greenness for the second service, the predicted level of greenness for the second service being based on a current level of greenness for the second service and a predicted scale up factor for the second service;
compare, the predicted level of greenness for the first service to the predicted level of greenness for the second service; and
assign a first priority to the first service and a second priority to the second service for use in scaling based on the comparison.

12. The computing device of claim 11, wherein the first priority is lower than the second priority, and wherein the one or more processors are further configured to reserve, based on the first priority and the second priority, one or more non-green or less-green resources for one or more replicas of the first service.

13. The computing device of claim 11, wherein the first priority is lower than the second priority, and wherein the one or more processors are further configured to move the first workload to non-green or less-green resources and reserve vacated green resources for one or more replicas of a second workload of the second service.

14. A method comprising:

predicting, by one or more processors, an occurrence of a scale event for a first service;
determining, by the one or more processors and based on the predicted occurrence of the scale event for the first service, a predicted level of greenness for the first service, the predicted level of greenness being based on a current level of greenness for the first service and a predicted scale up factor;

determining, by the one or more processors, whether the predicted level of greenness for the first service satisfies a first threshold; and

performing, by the one or more processors and based on whether the predicted level of greenness for the first service satisfies the first threshold, a first action on a first workload of the first service.

15. A computer-readable medium comprising instructions which, when executed by one or more programmable processors, cause the one or more programmable processors to perform the method recited by claim 14.

**FIG. 1**

FIG. 2

FIG. 3

FIG.4

EP 4 521 197 A2

502

PREDICT AN OCCURRENCE OF A SCALE EVENT FOR A FIRST
SERVICE

504

DETERMINE, BASED ON THE PREDICTED OCCURRENCE OF
THE SCALE EVENT FOR THE FIRST SERVICE, A PREDICTED
LEVEL OF GREENNESS FOR THE FIRST SERVICE

506

DETERMINE WHETHER THE PREDICTED LEVEL OF
GREENNESS FOR THE FIRST SERVICE SATISFIES A FIRST
THRESHOLD

508

PERFORM, BASED ON WHETHER THE PREDICTED LEVEL OF
GREENNESS SATISFIES THE FIRST THRESHOLD, A FIRST
ACTION ON A FIRST WORKLOAD OF THE FIRST SERVICE

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 75946824
- IN 202341060929
- US 2013044378 W
- US 22650914